# EUROPÄISCHE PATENTSCHRIFT

(11) **EP 2 000 329 B1**
(45) Veröffentlichungstag und Bekanntmachung des Hinweises auf die Patenterteilung: **23.06.2010**
(21) Anmeldenummer: 08154906.5
(22) Anmeldetag: 22.04.2008
(51) Int. Cl.: B60C 11/12

(54) **Fahrzeugluftreifen**
Pneumatic tyres
Bandages pneumatiques

(30) Priorität: 06.06.2007 DE 102007026814
(43) Veröffentlichungstag der Anmeldung: 10.12.2008
(73) Patentinhaber: Continental Reifen Deutschland GmbH, 30165 Hannover (DE)
(72) Erfinder: Bolz, Gerrit, 29308 Winsen (DE); Maggiora, Alberto, 30161 Hannover (DE); Wiese, Klaus, 30559 Hannover (DE)
(74) Vertreter: Finger, Karsten

(56) Entgegenhaltungen:
- EP-A- 0 213 452
- EP-A- 1 780 052
- JP-A- 11 123 910
- JP-A- 2002 103 921
- JP-A- 2002 356 105

## Beschreibung

Die Erfindung betrifft einen Fahrzeugluftreifen mit einem Laufstreifen, welcher sich aus Profilelementen, wie Profilblöcken oder Profilrippen, zusammensetzt, welche mit Einschnitten versehen sind, die zumindest im Wesentlichen in Profilquerrichtung und in diese Richtung gerade verlaufen und in radialer Richtung aus Abschnitten unterschiedlicher bzw. variierender radialer Orientierung bestehen.

Fahrzeugluftreifen mit Laufstreifenprofilen mit schmalen Einschnitten sind insbesondere für den Einsatz unter winterlichen Fahrbedingungen vorgesehen und in unterschiedlichen Ausführungsvarianten bekannt. Aus der US-A-4,794,965 ist ein Laufstreifen für einen Fahrzeugluftreifen bekannt, bei dem die Profilelemente mit einer geraden Anzahl von Einschnitten versehen sind, die an der Peripherie der Profilelemente einen geradlinigen Verlauf zeigen, in radialer Richtung jedoch entlang eines zickzack-förmigen Weges verlaufen, wobei sich die Amplitude des Zickzacks ändert, insbesondere in Richtung Profilblockinneres geringer wird. Die Einschnitte münden mit einem ihrer gegenüber der radialen Richtung geneigt verlaufenden Abschnitte an der Blockperipherie nach außen. Bei dem aus der DE-A-41 075 47 bekannten Fahrzeugluftreifen sind Profilelemente mit Einschnitten vorgesehen, die in Richtung ihrer radialen Erstreckung einen gekrümmten Verlauf aufweisen, derart, dass sie an der Profiloberfläche einen Abschnitt aufweisen, welcher unter einem Austrittswinkel von bis zu 60° zur Reifenprofiloberfläche verläuft und am Einschnittgrund einen Abschnitt mit einem Eintauchwinkel von bis zu 20° zur radialen Richtung aufweisen. Zwischen der Reifenprofiloberfläche und dem Einschnittgrund erfolgt eine Umkehrung der Neigung. Derart gestaltete Einschnitte sollen an der Profiloberfläche Griffkanten zur Verfügung stellen, die eine wesentlich bessere Anpassung an feine Strukturen im Untergrund, insbesondere durch ein Umschließen von kleinsten Bodenunebenheiten, gewährleisten. Die Einschnitte können auch derart ausgeführt sein, dass sich ihr Abschnitt, der an der Laufstreifenperipherie nach außen mündet, kontinuierlich aufweitet und eine größere Breite aufweist als der Abschnitt am Einschnittgrund.

Die DE-A-35 31 047 betrifft einen Fahrzeugluftreifen mit einem Laufstreifen mit Einschnitten mit einer mehrere Zehntelmillimeter betragenden Breite und einer der Profiltiefe zumindest im Wesentlichen entsprechenden Tiefe, wobei sich die Einschnitte von der Laufstreifenperipherie radial oder schräg geneigt in das betreffende Profilelement erstrecken. Die Einschnitte weisen eine zur Oberfläche des Laufstreifens hin kontinuierlich erweiterte Öffnung auf, die zumindest im Mündungsabschnitt vorliegt und in der erweiterten Breite um mindestens 1,5 mal größer ist als die Einschnittsbreite mit 0,05- bis 0,15facher Profiltiefe. Mit derart ausgeführten Einschnitten soll das Zischgeräusch, welches von Einschnitten ohne Erweiterung durch Kompressionseffekte während des Abrollens erzeugt wird, wesentlich vermindert werden. Die durch die Öffnungserweiterung bewirkte Volumenvergrößerung soll zu einer entsprechenden Verringerung der erzeugten Schallenergie beitragen.

Einschnitte, wie sie beispielsweise aus der US-A-4,794,965 und der DE-A-41 075 47 bekannt sind, werden üblicherweise als dreidimensionale Einschnitte bzw. 3D-Einschnitte bezeichnet. Ziel ihres Einsatzes in PKW-Winterreifen ist eine Versteifung des Laufstreifens in Umfangsrichtung ohne die Anzahl an Griffkanten an der Kontaktfläche zum Untergrund zu reduzieren. Die erwünschte höhere Umfangssteifigkeit des Laufstreifens soll kürzere Bremswege, vor allem auf trockenem Untergrund, sowie ein verbessertes Fahrzeughandling bewirken. Die Griffkanten sind vor allem auf Eis, Schnee und Nässe von Vorteil. Umfangreiche Untersuchungen seitens der Erfinder haben gezeigt, dass die Vorteile von 3D-Einschnitten in der rechnerischen Simulation zwar deutlich erkennbar sind, in der Praxis am Reifen aber bei den bisher bekannten Ausführungen enttäuschend gering sind. Die Erfinder haben als Ursache herausgefunden, dass in der rechnerischen Simulation ein Gleitschlupf der Profilblöcke nicht berücksichtigt wurde. In der Praxis tritt jedoch ein Gleitschlupf auf, der zur Folge hat, dass sich weichere Teile der Profilblöcke, insbesondere jene den Quernuten benachbarten Teile, beim Bremsen quasi einrollen. In der Praxis verhalten sich daher Profilblöcke mit 3D-Einschnitten nur solange steif bis sie rutschen. Durch den erwähnten Einrolleffekt kommt es zu lokalen Drucküberhöhungen in unmittelbarer Nachbarschaft von Profilblockbereichen, die gar keinen Kontakt mehr zur Fahrbahnoberfläche haben. Diese lokalen Einrolleffekte wirken der an sich erhöhten Profilblocksteifigkeit direkt entgegen, sodass in Summe die mit teuren 3D-Lamellenblechen erkaufte Erhöhung der Steifigkeit kaum mehr Vorteile bietet. So kann auch der Trockenbremsweg mit konventionellen geraden Einschnitten jenem von 3D-Einschnitten entsprechen.

3D-Einschnitte in Laufstreifenprofilen besitzen somit ein erhebliches Potenzial, welches jedoch in der Praxis bisher nicht genutzt werden konnte. Hier setzt nun die Erfindung ein, deren Aufgabe darin besteht, mit geeigneten Maßnahmen das Potenzial von 3D-Einschnitten, insbesondere zur Verringerung des Trockenbremsweges, erheblich besser ausnützen zu können.

Gelöst wird die gestellte Aufgabe erfindungsgemäß dadurch, dass die Einschnitte mit einem in radialer Richtung verlaufenden Endabschnitt an der Peripherie des Profilelementes nach außen münden und dass die Einschnittkanten an der Peripherie angefast ausgeführt sind.

Bei der Erfindung werden die oberflächennahen Bereiche der Profilelemente durch die 3D-Einschnitte in einer Art versteift, dass die erwähnten Einrolleffekte unter Gleitschlupf entweder deutlich reduziert oder sogar verhindert werden können. Die Erfinder haben dabei erkannt, dass die Profilsteifigkeit, insbesondere im Zusammenhang mit den vorgesehenen 3D-Einschnitten, in einem homogenen Material, wie es Gummi ist, ein rein geometrisches Problem ist und sich durch die getroffenen Maßnahmen - die Einschnitte münden mit einem in radialer Richtung verlaufenden Abschnitt an der Profilelementperipherie nach außen und die Mündungsbereiche sind angefast - das gesetzte Ziel erreichen lässt. Durch die auch nun in der Praxis signifikant bessere Ausnützung der bereits in der Simulation nachgewiesenen höheren Steifigkeit durch 3D-Einschnitte ergibt sich auch eine Verbesserung des Kraftübertragungspotenzials beim Beschleunigen sowie beim Bremsen und bei Kurven- und Kreisfahrt.

Gemäß der Erfindung ist es für eine Versteifung der oberflächennahen Bereiche der Profilelemente optimal, wenn der Endabschnitt der Einschnitte an der Peripherie des Profilelements eine Länge von 1,5 mm bis 2 mm aufweist. An den Endabschnitt kann unmittelbar ein zur radialen Richtung geneigter Einschnittsabschnitt anschließen. Vorteilhafter Weise können gemäß der Erfindung ausgeführte Einschnitte auch mehrere an den in radialer Richtung verlaufenden Endabschnitt anschließende Abschnitte, die beispielsweise in Zickzack oder Wellenform verlaufen, aufweisen.

Die durch die Anfasungen gebildeten Schrägflächen verlaufen zur radialen Richtung unter einem Winkel von 30° bis 60°, wobei die radial innere Kanten der Schrägflächen sich in einer Tiefe von bis zu 1 mm, insbesondere bis zu 0,8 mm, befinden.

Weitere Merkmale, Vorteile und Einzelheiten der Erfindung werden nun anhand der beiden Zeichnungsfiguren näher erläutert. Dabei zeigen
Fig. 1 einen Schnitt durch einen Profilblock eines Laufstreifens eines Fahrzeugluftreifens mit gemäß dem Stand der Technik ausgeführten Einschnitten und
Fig. 2 im Schnitt einen Profilblock eines Laufstreifens eines Fahrzeugluftreifens mit erfindungsgemäß ausgeführten Einschnitten.

Laufstreifen von Fahrzeugluftreifen, insbesondere von Reifen für den Einsatz unter winterlichen Fahrbedingungen, weisen Profilelemente mit einer Vielzahl von Einschnitten mit einer Breite von 0,3 mm bis 0,6 mm auf.

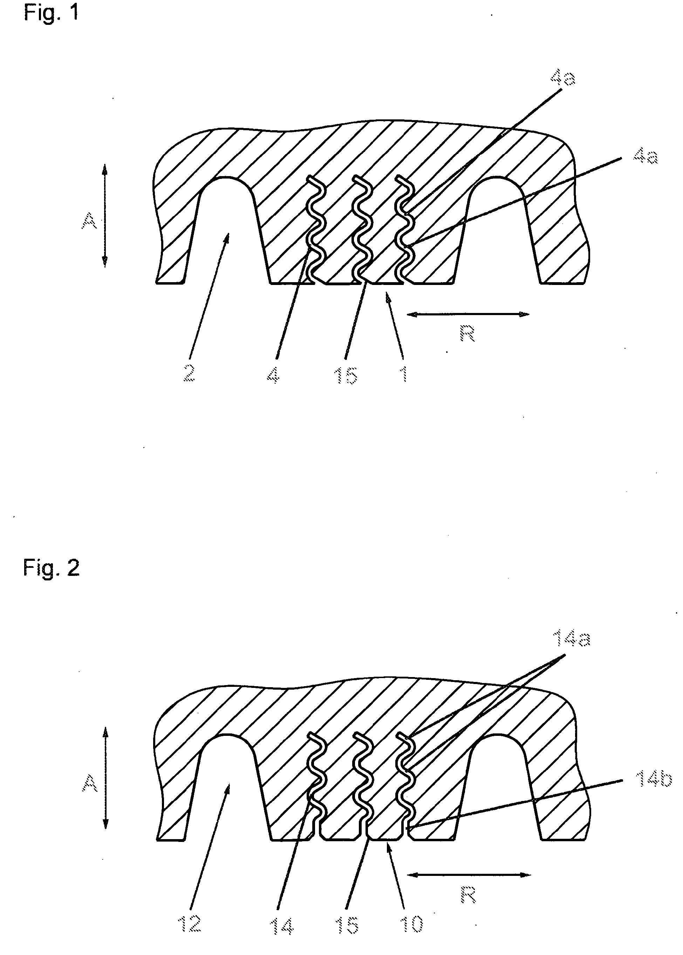

Die beiden Zeichnungsfiguren zeigen jeweils einen Längsschnitt durch einen Profilblock 1, 10 parallel zur bzw. in Reifenumfangsrichtung, die durch den Doppelpfeil R angedeutet ist. Dem Profilblock 1, 10 in Umfangsrichtung benachbart verlaufen Quernuten 2 (Fig. 1) bzw. 12 (Fig. 2). Nicht gezeigte Umfangsnuten begrenzen üblicherweise die Profilblöcke 1, 10 in Querrichtung des Laufstreifens. Die Profilblöcke 1, 10 sind mit einer Anzahl von, hier sind es jeweils drei, Einschnitten 4, 14 versehen, die im Wesentlichen in Profilquerrichtung und in dieser Richtung geradlinig verlaufen.

Die Einschnitte 4, 14 sind sogenannte dreidimensionale Einschnitte (3D-Einschnitte), worunter üblicherweise Einschnitte verstanden werden, die in Richtung ihrer radialer Erstreckung einen besonderen, von einem geraden Verlauf abweichenden Verlauf aufweisen. Die Einschnitte 4 gemäß dem Stand der Technik sind in radialer Richtung zickzack- bzw. wellenförmig verlaufende Einschnitte, bei dem gezeigten Beispiel mit konstanter Amplitude und konstanter Wellenlänge. Jeder Einschnitt 4 besteht daher aus einer Aufeinanderfolge von gegenüber der radialen Richtung (Doppelpfeil A) entsprechend der gewählten Wellenlänge deutlich geneigten Abschnitten 4a, wobei der Abschnitt 4a, mit welchem der Einschnitt 4 an der Laufstreifenperipherie nach außen mündet, ebenfalls ein geneigter Abschnitt ist.

Es ist bekannt, derart ausgeführte 3D-Einschnitte 4, vor Allem in Winterlaufstreifenprofilen von Reifen für Personenkraftwagen, in einer großen Anzahl vorzusehen. Die Einschnitte 4 sollen das Laufstreifenprofil in Längsrichtung versteifen ohne die Anzahl von (insbesondere auf eisigem, schneeigem oder nassem Untergrund benötigten) Griffkanten an der Kontaktfläche zur Fahrbahn bzw. zum Untergrund zu reduzieren. Eine hohe Längssteifigkeit des Laufstreifens bewirkt kürzere Bremswege, vor allem auf trockenem Untergrund, sowie auch meist ein besseres Fahrzeughandling.

Umfangreiche Untersuchungen seitens der Erfinder haben gezeigt, dass die Vorteile von 3D-Einschnitten in der rechnerischen Simulation zwar erheblich sind, in der Praxis am Reifen aber wesentlich geringer sind als es die rechnerische Simulation erwarten lässt. Ursache dieses festgestellten Widerspruchs zwischen der Theorie und der Praxis ist, dass in der rechnerischen Simulation von Steifigkeiten für am Untergrund nicht gleitende Profilblöcke ausgegangen wird. In der Praxis hingegen tritt ein Gleitschlupf zwischen den Profilblöcken und dem Untergrund auf, der bewirkt, dass sich die durch die Einschnitte weicheren Abschnitte der Profilblöcke quasi einrollen, insbesondere der an der Vorderkante eines Profilblockes befindliche Blockteil. Somit kommt es zu lokalen Drucküberhöhungen in unmittelbarer Nachbarschaft von Bereichen in Profilblöcken, die gar keinen Kontakt zur Fahrbahnoberfläche mehr haben. Diese Effekte wirken der durch die 3D-Einschnitte an sich erhöhten Profilblocksteifigkeit direkt entgegen.

Mit erfindungsgemäß ausgeführten 3D-Einschnitten lassen sich Profilblöcke in ihren oberflächennahen Teilen derart versteifen, dass die geschilderten Einrolleffekte unter Gleitschlupf maßgeblich reduziert bzw. sogar verhindert werden. Die in Fig. 2 im Profilblock 10 gezeigten erfindungsgemäß ausgeführten Einschnitte 14 weisen in radialer Richtung ebenfalls eine Anzahl von zickzack- bzw. wellenförmig verlaufenden Abschnitten 14a konstanter Amplitude und konstanter Wellenlänge auf, wobei jener Abschnitt 14b, mit dem die Einschnitte 14 an der Blockperipherie nach außen münden, in radialer Richtung verläuft. Die Länge des Abschnittes 14a wird bei PKW-Reifen zwischen 1,5 mm und 2,5 mm gewählt. Zusätzlich sind die Kanten der Einschnitte 14 an der Profilblockperipherie angefast und weisen daher Schrägflächen 15 auf, welche unter einem Winkel von 30° bis 60° zur radialen Richtung verlaufen. Die radial inneren Kanten der Schrägflächen 15 befinden sich in einer Tiefe von maximal 1 mm innerhalb des Profilblockes 10, bevorzugt in einer Tiefe zwischen 0,5 mm und 0,8 mm. In der Praxis durchgeführte Prüfungen haben gezeigt, dass Reifen mit Laufstreifen mit erfindungsgemäß ausgeführten 3D-Einschnitten 14 eine signifikante Verkürzung des Bremsweges auf trockenen Fahrbahnen aufweisen. Die erwähnten nachteiligen Einrolleffekte konnten nicht festgestellt werden.

Die Erfindung ist auf das dargestellte Ausführungsbeispiel nicht eingeschränkt, insbesondere können erfindungsgemäß ausgeführte Einschnitte eine beliebige 3D-Struktur in das Profilelement hinein aufweisen. Erfindungsgemäß ausgeführte Einschnitte werden übrigens wie herkömmlich ausgeführte Einschnitte mittels in die Reifenvulkanisationsform eingesetzten Lamellenblechen erzeugt, zur Bildung der Fasen bzw. Schrägflächen weisen die Bleche entsprechend breit ausgeführte Abschnitte auf.

### Bezugszeichenliste

- 1: Profilblick
- 10: Profilblock
- 2: Quernut
- 12: Quernut
- 4: Einschnitt
- 4a: Abschnitt
- 14.: Abschnitt
- 14a: Abschnitt
- 14b: Abschnitt
- 15.: Schrägflächen

## Patentansprüche

1. Fahrzeugluftreifen mit einem Laufstreifen, welcher sich aus Profilelementen, wie Profilblöcken (10) oder Profilrippen, zusammensetzt, welche mit Einschnitten (14) versehen sind, die zumindest im Wesentlichen in Profilquernchtung und in diese Richtung gerade verlaufen und in radialer Richtung aus Abschnitten (14a, 14b) unterschiedlicher bzw. variierender radialer Orientierung bestehen,
**dadurch gekennzeichnet,**
**dass** die Einschnitte (14) mit einem in radialer Richtung verlaufenden Endabschnitt (14b) an der Peripherie des Profilelementes (10) nach außen münden und dass die Einschnittkanten an der Peripherie angefast ausgeführt sind.

2. Fahrzeugluftreifen nach Anspruch 1, **dadurch gekennzeichnet, dass** der Endabschnitt (14b) an der Peripherie des Profilelements (10) eine Länge von 1,5 mm bis 2 mm aufweist.

3. Fahrzeugluftreifen nach Anspruch 1 oder 2, **dadurch gekennzeichnet, dass** an den Endabschnitt (14b) unmittelbar ein zur radialen Richtung geneigter Abschnitt (14a) anschließt.

4. Fahrzeugluftreifen nach einem der Ansprüche 1 bis 3, **dadurch gekennzeichnet, dass** an den Endabschnitt (14b) in Zickzack- oder Wellenform verlaufende weitere Abschnitte (14a) anschließen.

5. Fahrzeugluftreifen nach Anspruch 1, **dadurch gekennzeichnet, dass** die durch die Anfasungen gebildeten Schrägflächen (15) zur radialen Richtung unter einem Winkel von 30° bis 60° verlaufen.

6. Fahrzeugluftreifen nach Anspruch 1 oder 5, **dadurch gekennzeichnet, dass** die radial inneren Kanten der Schrägflächen (15) in einer Tiefe von bis zu 1 mm, insbesondere bis zu 0,8 mm, verlaufen.

## Claims

1. Pneumatic vehicle tyre with a tread rubber, which is made up of profile elements, such as profile blocks (10) or profile ribs, which are provided with sipes (14), which extend at least substantially in the transverse direction of the profile and in this direction run straight and in the radial direction comprise portions (14a, 14b) of differing or varying radial orientation, **characterized in that** the sipes (14) open towards the outside with a radially extending end portion (14b) at the periphery of the profile element (10) and **in that** the edges of the sipes are bevelled at the periphery.

2. Pneumatic vehicle tyre according to Claim 1, **characterized in that** the end portion (14b) at the periphery of the profile element (10) has a length of from 1.5 mm to 2 mm.

3. Pneumatic vehicle tyre according to Claim 1 or 2, **characterized in that** the end portion (14b) is directly adjoined by a portion (14a) that is inclined with respect to the radial direction.

4. Pneumatic vehicle tyre according to one of Claims 1 to 3, **characterized in that** the end portion (14b) is adjoined by further portions (14a) extending in a zigzagging or wavy form.

5. Pneumatic vehicle tyre according to Claim 1, **characterized in that** the sloping faces (15) formed by the bevels extend at an angle of from 30° to 60° with respect to the radial direction.

6. Pneumatic vehicle tyre according to Claim 1 or 5, **characterized in that** the radially inner edges of the sloping faces (15) extend at a depth of up to 1 mm, in particular up to 0.8 mm.

## Revendications

1. Bandage pneumatique pour roue de véhicule, présentant
une bande de roulement constituée
d'éléments profilés, par exemple des blocs profilés (10) ou des nervures profilées, dotés d'entailles (14) qui s'étendent au moins essentiellement dans la direction transversale du profilé et en ligne droite dans cette direction et
de parties (14a, 14b) s'étendant dans la direction radiale sous des orientations radiales différentes ou variables,
**caractérisé en ce que**
les entailles (14) débouchent à l'extérieur par une partie terminale (14b) qui s'étend dans la direction radiale à la périphérie de l'élément profilé (10) et
**en ce que** les chants des entailles sont fraisés à la périphérie.

2. Bandage pneumatique pour roue de véhicule selon la revendication 1, **caractérisé en ce qu'**à la périphérie de l'élément profilé (10), la partie terminale (14b) présente une longueur de 1,5 mm à 2 mm.

3. Bandage pneumatique pour roue de véhicule selon les revendications 1 ou 2, **caractérisé en ce qu'**une partie (14a) inclinée par rapport à la direction radiale se raccorde directement à la partie terminale (14b).

4. Bandage pneumatique pour roue de véhicule selon l'une des revendications 1 à 3, **caractérisé en ce que** d'autres parties (14a) qui s'étendent en zigzag ou en ondulations se raccordent à la partie terminale (14b).

5. Bandage pneumatique pour roue de véhicule selon la revendication 1, **caractérisé en ce que** les surfaces obliques (15) formées par fraisage forment un angle de 30° à 60° par rapport à la direction radiale.

6. Bandage pneumatique pour roue de véhicule selon les revendications 1 ou 5, **caractérisé en ce que** les chants situés radialement à l'intérieur des surfaces obliques (15) s'étendent sur une profondeur de jusque 1 mm et en particulier de jusque 0,8 mm.
